# EUROPEAN PATENT SPECIFICATION

(11) **EP 4 336 608 B1**
(45) Date of publication and mention of the grant of the patent: **11.02.2026**
(21) Application number: 22876872.7
(22) Date of filing: 29.09.2022
(51) Int. Cl.: H01M 10/04, H01M 10/0585, H01M 50/105, H01M 10/0525, B05D 3/02, B29C 65/14, B32B 37/22, B29C 65/36, B29C 65/46, B29C 65/00, B29L 31/34

(54) **ELECTRODE ASSEMBLY MANUFACTURING METHOD AND APPARATUS**
VERFAHREN UND VORRICHTUNG ZUR HERSTELLUNG EINER ELEKTRODENANORDNUNG
PROCÉDÉ ET APPAREIL DE FABRICATION D'ENSEMBLE ÉLECTRODE

(30) Priority: 30.09.2021 KR 20210129484
(43) Date of publication of application: 13.03.2024
(73) Proprietor: LG Energy Solution, Ltd., Seoul 07335 (KR)
(72) Inventor: SEO, Young Sun, Daejeon 34122 (KR); LEE, Sang Don, Daejeon 34122 (KR); CHO, Cheul Kyun, Daejeon 34122 (KR)
(74) Representative: Goddar, Heinz J.
(86) International application number: PCT/KR2022/014608
(87) International publication number: WO 2023/055100

(56) References cited:
- EP-A1- 3 955 364
- JP-B2- 6 351 930
- JP-B2- 6 351 930
- KR-A- 20160 047 690
- KR-A- 20160 047 690
- KR-A- 20160 085 812
- KR-A- 20200 131 181
- KR-A- 20200 131 181
- KR-A- 20210 052 370

## Description

### TECHNICAL FIELD

### TECHNICAL FIELD

The present disclosure relates to a method and device for manufacturing an electrode assembly.

### BACKGROUND ART

Secondary batteries are rechargeable unlike primary batteries and capable of being reduced in size and increasing capacity and thus, much research and development for the secondary batteries are carried out recently. As the technical development of and a demand for mobile devices increase, a demand for the secondary batteries as energy sources rapidly increases.

According to shapes of a battery case, the secondary batteries are classified into coin type batteries, cylindrical type batteries, prismatic type batteries, and pouch type batteries. In the secondary batteries, an electrode assembly mounted in a battery case is a chargeable and dischargeable power generating device having a structure in which an electrode and a separator are stacked.

The electrode assembly may be generally classified into a jelly-roll type electrode assembly wound by interposing a separator between sheet-shaped positive and negative electrodes, each of which is coated with an active material, a stacked type electrode assembly in which multiple positive and negative electrodes are stacked in sequence with a separator interposed therebetween, and a stacked/folded type electrode assembly in which stacked type unit cells are wound together with a separation film having a long length.

Recently, the pouch type batteries, each of which has a structure in which the stacked type electrode assembly is embedded in a pouch type case, attract a lot of interest for reasons such as low manufacture cost, small weight, and easy change in shape, and use thereof also gradually increases.

However, in the stacked type electrode assembly in which multiple mono-cells, half-cells, and so on, are stacked, movement between the cells occurs because adhesion between the cells does not exist and the entire circumference of the electrode assembly is surrounded and fixed solely by only a tape.

Accordingly, there are problems, during a packaging (PKG) process, that misalignment of an X axis and a Y axis of a tab occurs due to a lack of a fixing force of the stacked cells when welding the tab, a cell interference occurs due to the lack of the fixing force when combining the stacked cells with a formed pouch, and electrolyte injection leads to folding of a separator portion at a cell edge to cause a short circuit. There are also problems, after the packaging (PKG) process, that a mark of the tape used to fix the stacked cells is left on a pouch surface, and an outer surface is deformed.

[Prior art document] (Patent document) Korean Patent Publication No. 10-2014-0015647

KR2020 0131181 A discloses a method for manufacturing an electrode assembly comprising a lamination process of alternately stacking an electrode and a separator to bond the stacked electrode and separator to each other, a cutting process of cutting the electrode and the separator, which are bonded to each other, to a predetermined size to form a plurality of unit cells, a stacking process of sequentially stacking the plurality of cut unit cells to form a cell stack, a heating process of heating the cell stack, and a unit cell bonding process of pressing the heated cell stack to bond the plurality of unit cells to each other.

KR2016 0047690 A discloses an electrode assembly method in which the stacked electrodes are subjected to induction heating.

JP 6351930 B2 discloses a method for manufacturing an electrode assembly, the method comprising a lamination process of alternately stacking an electrode and a separator to bond the stacked electrode and separator to each other, a cutting process of cutting the electrode and the separator to predetermined size to form a plurality of unit cells, a stacking process of sequentially stacking the plurality of cut unit cells to form a cell stack, and an induction heating process of induction-heating the cell stack by an induction heater.

### DISCLOSURE OF THE INVENTION

### TECHNICAL PROBLEM

One aspect of the present invention is to provide a method and device for manufacturing an electrode assembly, which improve fixing force between stacked cells to improve the quality.

### TECHNICAL SOLUTION

A method for manufacturing an electrode assembly according to an embodiment of the present invention includes: a lamination process of alternately stacking an electrode and a separator to bond the stacked electrode and separator to each other; a cutting process of cutting the electrode and the separator, which are bonded to each other, to a predetermined size to form a plurality of unit cells; a cell stacking process of sequentially stacking the plurality of cut unit cells to form a cell stack; an induction heating process of induction-heating the cell stack by an induction heater; and a unit cell bonding process of pressing the induction-heated cell stack to bond the plurality of unit cells to each other,
herein the induction heater comprises an upper coil part disposed above the cell stack, and a lower coil part disposed below the cell stack, and
wherein, in the induction heating process, the cell stack is induction-heated while passing between the upper coil part and the lower coil part, and
wherein an induction coil of each of the upper coil part and the lower coil part is wound in a horizontal direction and disposed in plurality in the horizontal direction to form a pattern.

A method for manufacturing a secondary battery according to an embodiment of the present invention may include an accommodation process of accommodating, in a pouch, an electrode assembly manufactured by the method for manufacturing an electrode assembly according to an embodiment of the present invention.

A device for manufacturing an electrode assembly according to an embodiment of the present invention includes: a lamination part that alternately stacks an electrode and a separator and bond the stacked electrode and separator to each other; a cutting part that cuts the electrode and the separator, which are bonded to each other, to a predetermined size to form a plurality of unit cells; a stacking part that sequentially stacks the plurality of cut unit cells to form a cell stack; an induction heater that induction-heats the cell stack; and a pressing part that presses the induction-heated cell stack to bond the plurality of unit cells to each other,
wherein the induction heater comprises an upper coil part disposed above the cell stack, and a lower coil part disposed below the cell stack,
wherein the induction heater induction-heats the cell stack disposed between the upper coil part and the lower coil part, and
wherein an induction coil of each of the upper coil part and the lower coil part is wound in a horizontal direction and disposed in plurality in the horizontal direction to form a pattern.

### ADVANTAGEOUS EFFECTS

According to the present invention, the plurality of unit cells are stacked and then, bonded to each other through the induction heating so that the fixing force between the stacked unit cells may be improved. Accordingly, the misalignment of the X axis and the Y axis may be prevented, the cell interference may be prevented from occurring when accommodating the cell in the pouch, the folding of the separator portion at the cell edge may be prevented to prevent the occurrence of the short circuit, and the separate taping operation may not be required to fix the stacked cells so as to prevent the fixed mark of the taped tape on the cell or the deformation of the outer surface.

### BRIEF DESCRIPTION OF THE DRAWINGS

FIG. 1 is a perspective view illustrating a lamination process, a cutting process, and a cell stacking process in a method for manufacturing an electrode assembly according to an embodiment of the present invention.
FIG. 2 is a perspective view illustrating an induction heating process in the method for manufacturing an electrode assembly according to an embodiment of the present invention.
FIG. 3 is a cross-sectional view illustrating a first example of an induction heater taken along a line A-A' in FIG. 2.
FIG. 4 is a cross-sectional view illustrating a second example of the induction heater taken along the line A-A' in FIG. 2.
FIG. 5 is a cross-sectional view illustrating a third example of the induction heater taken along the line A-A' in FIG. 2.
FIG. 6 is a perspective view illustrating a unit cell bonding process in the method for manufacturing an electrode assembly according to an embodiment of the present invention.
FIG. 7 is a plan view illustrating an accommodation process in a method for manufacturing a secondary battery according to an embodiment of the present invention.
FIG. 8 is a plan view illustrating a secondary battery manufactured by the method for manufacturing a secondary battery according to an embodiment of the present invention.

### MODE FOR CARRYING OUT THE INVENTION

The above and other aspects, features and other advantages of the present invention will be more clearly understood from the following detailed description and preferred embodiments taken in conjunction with the accompanying drawings. Note that like elements are designated by like reference numerals as far as possible even if they are shown in different drawings. The present invention may be embodied in different forms and should not be construed as limited to the embodiments set forth herein. Moreover, detailed descriptions related to well-known art will be ruled out in order not to unnecessarily obscure subject matters of the present invention.

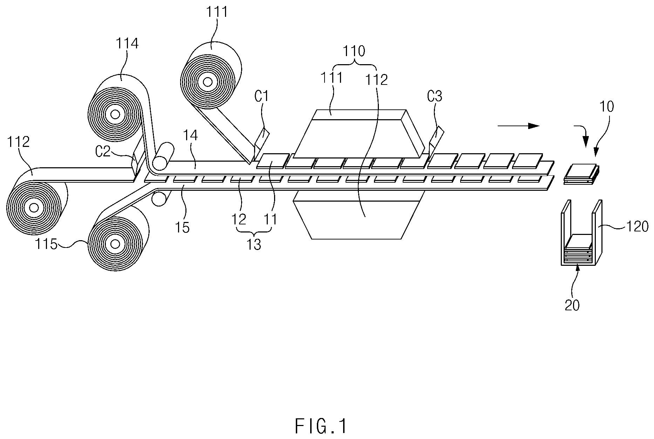

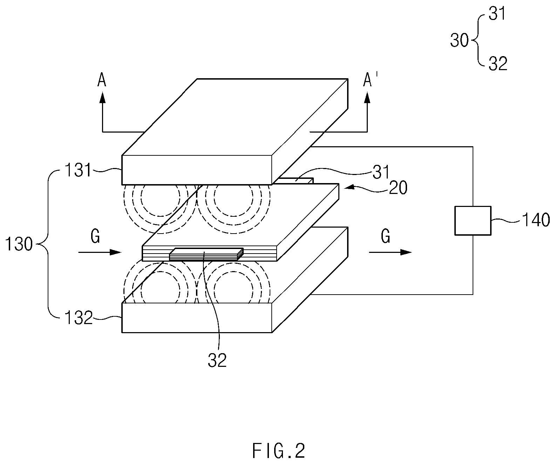

FIG. 1 is a perspective view illustrating a lamination process, a cutting process, and a cell stacking process in a method for manufacturing an electrode assembly according to an embodiment of the present invention. FIG. 2 is a perspective view illustrating an induction heating process in the method for manufacturing an electrode assembly according to an embodiment of the present invention.

Referring to FIGS. 1 and 2, the method for manufacturing an electrode assembly according to the present invention includes a lamination process of laminating an electrode 13 and separators 14 and 15, a cutting process of cutting a stack after the lamination process to a predetermined size to form a plurality of unit cells 10, a stacking process of stacking the unit cells after the cutting process to form a cell stack 20, an induction heating process of induction-heating the cell stack 20 after the stacking process by an induction heater 130, and a unit cell bonding process of pressing the induction-heated cell stack 20 after the induction heating process, to be bonded to each other so as to manufacture an electrode assembly.

Here, the electrode assembly manufactured by the method for manufacturing an electrode assembly according to an embodiment of the present invention may be made as a chargeable and dischargeable power generating device.

In more detail, referring to FIG. 1, the electrode 13 and the separators 14 and 15 are alternately stacked and then bonded to each other in the lamination process.

In the lamination process, a lamination part 110 may bond the stacked electrode 13 and separators 14 and 15 to each other by application of heat and pressure.

The lamination part 110 may include an upper lamination part 111 and a lower lamination part 112. In the lamination process, the stacked electrode 13 and separators 14 and 15 may be pressed and laminated through the upper lamination part 111 and the lower lamination part 112 in an upward-downward direction, while passing between the upper lamination part 111 and the lower lamination part 112.

In the lamination process, the electrode 13 and the separators 14 and 15 may be supplied to the lamination part 110 while being unwound from electrode rolls 111 and 112 in which the electrode 13 is wound, and separator rolls 114 and 115 in which the separators 14 and 15 are wound, respectively. Here, the electrode 13 may be supplied while being cut to a predetermined size through electrode cutters C1 and C2 in the lamination process.

In the cutting process after the lamination process, the electrode 13 and the separators 14 and 15 that are bonded to each other through the lamination process may be cut to a predetermined size to form a plurality of unit cells 10. Here, the electrode 13 and the separators 14 and 15 may be supplied while being cut to a predetermined size through a cutting part C3 in the cutting process. Here, the cutting part may be, for example, a cell cutter.

Each of the unit cells 10 may include at least one electrode 13 and at least one separator 14 or 15. Here, the unit cell 10 may be a half-cell, a mono-cell, or a bi-cell. For example, the half-cell may include one electrode 13 and one separator 14 or 15, and the mono-cell and the bi-cell may each include at least one positive electrode 11, a separator 14 or 15, and at least one negative electrode 12, alternately.

The positive electrode 11 may include a positive electrode collector and a positive electrode active material applied to the positive electrode collector. The positive electrode collector may be made of, for example, a foil made of an aluminum material, and the positive electrode active material may include, for example, a lithium manganese oxide, a lithium cobalt oxide, a lithium nickel oxide, a lithium iron phosphate, or a compound or mixture including at least one thereof. Here, the positive electrode 11 may have a thickness of 102 µm or less.

The negative electrode 12 may include a negative electrode collector and a negative electrode active material applied to the negative electrode collector. The negative electrode collector may be made of, for example, a foil made of a copper (Cu) or nickel (Ni) material. The negative electrode active material may include, for example, synthetic graphite, a lithium metal, a lithium alloy, carbon, petroleum coke, activated carbon, graphite, a silicon compound, a tin compound, a titanium compound, or an alloy thereof. The negative electrode active material may further include, for example, non-graphite-based silica (SiO), silicon carbide (SiC), or the like. Here, the negative electrode 12 may have a thickness of 110 µm or less.

The separator 14 or 15 may be made of an insulation material and a flexible material. Here, the separator 14 or 15 may be made of, for example, a microporous polyolefin-based resin film such as polyethylene or polypropylene. Here, the separator 14 or 15 may have a thickness of 15 µm or less.

The electrode 13 may has an end provided with an electrode tab 30. The electrode tab 30 may include a positive electrode tab 31 extending from an end of the positive electrode 11, and a negative electrode tab 32 extending from an end of the negative electrode 12.

In the stacking process after the cutting process, the plurality of unit cells 10 cut through the cutting process are stacked in sequence to form the cell stack 20. Here, the plurality of unit cells 10 are stacked in sequence through a stacking part in the stacking process. Here, the stacking part may include a stack guide part 120, and perform the stacking in the upward and downward direction while guiding the cell stack 20 through the stack guide part 120.

In the stacking process, at least 30 unit cells 10 may be stacked to form the cell stack 20.

In one example, 30 mono cells and one half-cell may be stacked to form the cell stack 20 in the stacking process. Here, the cell stack 20 may have a thickness of 12.42 mm.

In another example, 60 mono cells and one half-cell may be stacked to form the cell stack 20 in the stacking process. Here, the cell stack 20 may have a thickness of 24.60 mm.

Referring to FIG. 2, in the induction heating process after the stacking process, the cell stack 20 stacked through the stacking process is induction-heated through an induction heater 130.

For example, the cell stack 20 may be heated to a temperature of 50°C to 150°C in the induction heating process. Thus, the cell stack 20 may be heated to a temperature of 150°C or less in the induction heating process so as to prevent a damage of the separator, etc., caused by heat. The cell stack 20 may be heated to a temperature of 50°C or greater in the induction heating process so as to secure a bondable temperature. Here, the cell stack 20 may be heated to a temperature of 80°C to 95°C in the induction heating process so as to secure an optimum bondable temperature.

The induction heater 130 includes an upper coil part 131 disposed above the cell stack 20, and a lower coil part 132 disposed below the cell stack 20. In the induction heating process, the cell stack 20 is induction-heated while passing between the upper coil part 131 and the lower coil part 132. Here, the cell stack 20 may be induction-heated while moving through a transport means in a proceeding direction G in the induction heating process. The transfer means may include, for example, a conveyor belt or the like, but the present invention is not limited thereto.

For example, output of the induction heater 130 may be 500 khz to 1200 khz in the induction heating process, but the present invention is not limited thereto.

For example, a moving speed of the cell stack 20 may be set to 300 mm/s to 1000 mm/s in the induction heating process. For a specific example, the moving speed of the cell stack 20 may be set to 300 mm/s to 500 mm/s in the induction heating process. For a more specific example, the moving speed of the cell stack 20 may be set to 400 mm/s in the induction heating process.

In the induction heating process, the induction heater 130 may have a full-width of 70 mm to 120 mm and a full-length of 500 mm to 600 mm. Here, the full-length may be the length of the induction heater 130 in the proceeding direction G of the cell stack 20, and the full-width may be the width of the induction heater 130 in a lateral direction with respect to the proceeding direction G of the cell stack 20.

The induction heater 130 may have a thickness of, for example, 15 mm or greater.

The electrode 13 may include a metal material. In the induction heating process, a current may flow through the upper coil part 131 and the lower coil part 132 to generate an eddy current so as to heat the cell stack 20 by resistance heat of the electrode 13, which is generated by the eddy current. (That is, the cell stack 20 is heated in such a manner that when a metal object is in contact with magnetic lines of force, which are generated by flowing the current through the coil, the metal object generates the eddy current in a direction that bars magnetic flux change, and the Joule's heat is generated according to the resistance of the metal to heat the electrode made of a metal material.)

The induction heater 130 may further include a heating controller 140 that controls an induction heating temperature of each of the upper coil part 131 and the lower coil part 132. In the induction heating process, the heating controller 140 may control the heating temperature of each of the upper coil part 131 and the lower coil part 132 according to the moving speed of the cell stack 20. Here, the induction heater 130 may control the heating temperature by adjusting output, frequency, voltage, and current amount according to the moving speed of the cell stack 20.

Consequently, the plurality of unit cells 10 are heated through induction heating in the induction heating process so that each of the unit cells 10 may have a low temperature deviation and be heated rapidly. In particular, even a highly integrated stack cell in which many unit cells 10 are stacked has no or remarkably low temperature deviation between a central portion and an outer part of a stack through the induction heating, so that the plurality of unit cells 10 may be uniformly bonded to each other and a fixing force is remarkably improved. As the electrode of each of the stacked unit cells 10, which is made of a metal material, is induction-heated, the unit cells 10 disposed at the central portion of the stack may be heated remarkably rapidly when compared to the types of heat transfer such as conduction, convection, and radiation, and may be heated easily to a temperature suitable for sealing that does not damage the separator, etc.

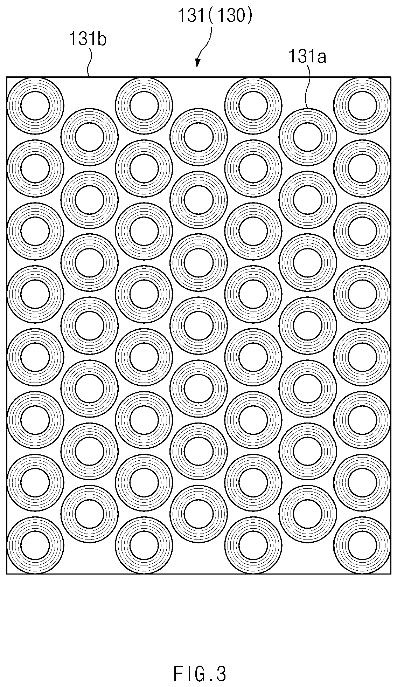

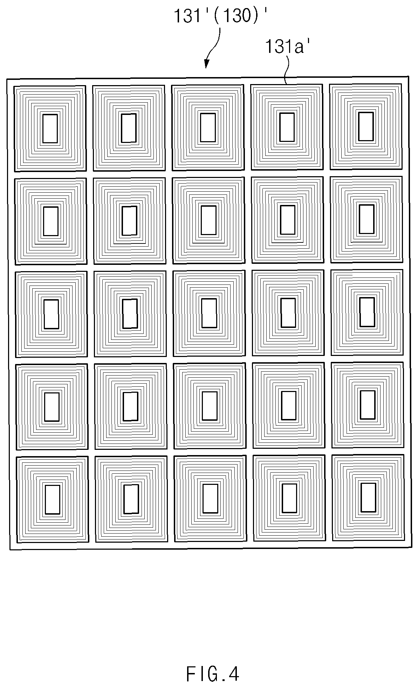

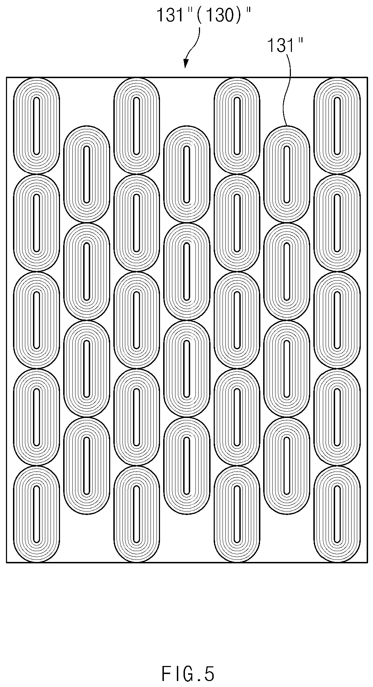

FIG. 3 is a cross-sectional view illustrating a first example of an induction heater taken along a line A-A' in FIG. 2. FIG. 4 is a cross-sectional view illustrating a second example of the induction heater taken along the line A-A' in FIG. 2. FIG. 5 is a cross-sectional view illustrating a third example of the induction heater taken along the line A-A' in FIG. 2.

Referring to FIGS. 2 to 5, in the induction heater 130, an induction coil 131a of each of the upper coil part 131 and the lower coil part 132 is wound in a horizontal direction and disposed in plurality in the horizontal direction to form a pattern. Here, the induction coils 131a of each of the upper coil part 131 and the lower coil part 132 may form a pattern in which the induction coils 131a are wound to have a planar cross-section having a circular shape, a rectangular shape, or an oval shape.

Specifically, referring to FIGS. 2 and 3, in the first example, the induction coils 131a of the induction heater 130, which are provided in each of the upper coil part 131 and the lower coil part 132, may form a pattern in which the induction coils 131a are wound to have a planar cross-section having a circular shape. Here, a case 131b in which the induction coils 131a wound in the form of the pattern are accommodated may be provided.

Referring to FIGS. 2 and 4, in the second example, induction coils 131a' of an induction heater 130', which are provided in each of an upper coil part 131' and a lower coil part, may form a pattern in which the induction coils 131a' are wound to have a planar cross-section having a rectangular shape.

Referring to FIGS. 2 and 5, in the third example, induction coils 131a" of an induction heater 130", which are provided in each of an upper coil part 131" and a lower coil part, may form a pattern in which the induction coils 131a" are wound to have a planar cross-section having an oval shape.

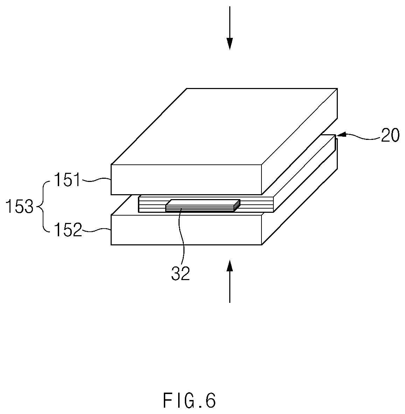

FIG. 6 is a perspective view illustrating a unit cell bonding process in the method for manufacturing an electrode assembly according to an embodiment of the present invention.

Referring to FIGS. 1 and 6, in the unit cell bonding process after the induction heating process, the cell stack 20 induction-heated through the induction heating process is pressed to bond the plurality of unit cells 10 to each other so as to manufacture the electrode assembly.

In the unit cell bonding process, a pressing part 150 may press the cell stack 20, which are stacked and induction-heated, by predetermined pressure to bond the unit cells 10 to each other.

The pressing part 150 may include an upper pressing part 151 and a lower pressing part 152. In the unit cell bonding process, the upper pressing part 151 and the lower pressing part 152 may press the cell stack 20 in the upward-downward direction to bond the unit cells 10 in the cell stack 20 to each other, while passing the cell stack 20 between the upper pressing part 151 and the lower pressing part 152.

Thus, the electrode assembly manufactured by the method for manufacturing an electrode assembly according to an embodiment of the present invention as configured above may improve the fixing force between the stacked unit cells 10 by stacking the plurality of unit cells 10 and then, uniformly heating and pressing the plurality of unit cells 10 through the induction heating to be bonded to each other. Accordingly, misalignment of an X axis and a Y axis may be prevented, a cell interference may be prevented from occurring when accommodating the cell in the pouch, folding of the separator 14 or 15 portion at a cell edge may be prevented to prevent an occurrence of a short circuit, and a separate taping operation may not be required to fix the stacked cells so as to prevent a fixed mark of a taped tape on the cell or deformation of an outer surface.

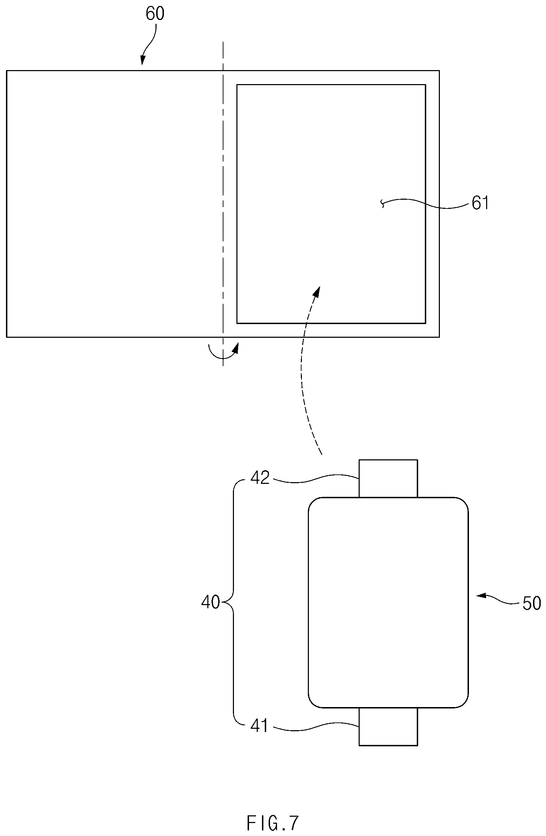

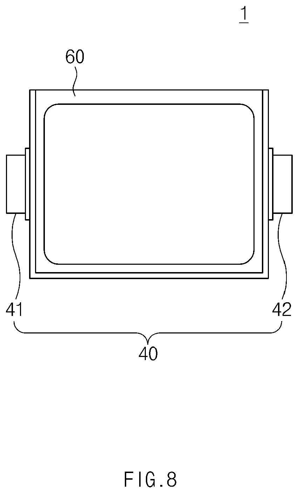

FIG. 7 is a plan view illustrating an accommodation process in a method for manufacturing a secondary battery according to an embodiment of the present invention. FIG. 8 is a plan view illustrating a secondary battery manufactured by the method for manufacturing a secondary battery according to an embodiment of the present invention.

Referring to FIGS. 7 and 8, the method for manufacturing a secondary battery according to the present invention may manufacture a secondary battery 1 by including an accommodation process of accommodating, in a pouch 60, an electrode assembly 50 manufactured by the method for manufacturing an electrode assembly described above.

In the accommodation process, an accommodation part 61 in which the electrode assembly 50 is accommodated may be formed in the sheet-shaped pouch 60, and the electrode assembly 50 may be accommodated in the accommodation part 61 and then, the accommodation part 61 may be covered and sealed.

In the accommodation process, the electrode assembly 50 may be accommodated in the pouch 60 so that a portion of an electrode lead 40, which is connected to an end portion of an electrode tab 30, is exposed to the outside of the pouch 60. The electrode lead 40 may include a positive electrode lead 41 connected to a positive electrode tab 31, and a negative electrode lead 42 connected to a negative electrode tab 32.

Hereinafter, a device for manufacturing an electrode assembly according to an embodiment of the present invention will be described.

Referring to FIGS. 1, 2, and 6, a device for manufacturing an electrode assembly according to the present invention manufactures an electrode assembly by including a lamination part 110 that bonds an electrode 13 to separators 14 and 15, a cutting part C3 that cuts the bonded stack to a predetermined size to form a plurality of unit cells 10, a stacking part that stacks the plurality of cut unit cells 10 in sequence to form a cell stack 20, an induction heater 130 that induction-heats the cell stack 20, and a pressing part 150 that presses the induction-heated cell stack 20 to bond the plurality of unit cells 10 to each other.

The device for manufacturing an electrode assembly according to an embodiment of the present invention is a device to which the method for manufacturing an electrode assembly according to an embodiment of the present invention described above is applied. Thus, this embodiment of the device for manufacturing an electrode assembly will be described by omitting or simply describing the content in common with the embodiment of the method for manufacturing an electrode assembly described above, and focusing on differences.

In more detail, the lamination part 110 stacks the electrode 13 and the separators 14 and 15 alternately and then, bond the stacked electrode 13 and separators 14 and 15 to each other.

The lamination part 110 bonds the stacked electrode 13 and separators 14 and 15 to each other by application of heat and pressure through the lamination part 110.

The lamination part 110 may include an upper lamination part 111 and a lower lamination part 112. Here, in the lamination process, the stacked electrode 13 and separators 14 and 15 may be pressed and laminated through the upper lamination part 111 and the lower lamination part 112 in the upward-downward direction, while passing between the upper lamination part 111 and the lower lamination part 112.

The cutting part C3 cuts the electrode 13 and the separators 14 and 15, which are bonded to each other, to a predetermined size to form the plurality of unit cells 10. Here, in the cutting part C3, the electrode 13 and the separators 14 and 15 may be supplied while being cut to a predetermined size through a cell cutter.

The stacking part stacks the plurality of unit cells 10 in sequence to form the cell stack 20. Here, the stacking part may include a stack guide part 120, and perform the stacking in the upward-downward direction while guiding the cell stack 20 through the stack guide part 120.

The induction heater 130 induction-heats the cell stack 20. For example, the induction heater 130 heat the cell stack 20 to a temperature of 50°C to 150°C. For a specific example, the cell stack 20 may be heated to a temperature of 80°C to 95°C in the induction heating process.

The induction heater 130 includes an upper coil part 131 disposed above the cell stack 20, and a lower coil part 132 disposed below the cell stack 20. Here, the cell stack 20 may be induction-heated while passing between the upper coil part 131 and the lower coil part 132 in the induction heating process. Here, the cell stack 20 may be induction-heated while moving through a transport means in the proceeding direction G in the induction heating process. The transport means may include, for example, a conveyor belt or the like, but the present invention is not limited thereto.

The induction heater 130 may have a full-width of 70 mm to 120 mm and a full-length of 500 mm to 600 mm. Here, the full-length may be the length of the induction heater 130 in the proceeding direction G of the cell stack 20, and the full-width may be the width of the induction heater 130 in a lateral direction with respect to the proceeding direction G of the cell stack 20.

The induction heater 130 may have a thickness of 15 mm or greater.

The electrode 13 may include a metal material. In the induction heater 130, a current may flow through the upper coil part 131 and the lower coil part 132 to generate an eddy current so as to heat the cell stack 20 by resistance heat of the electrode 13, which is generated by the eddy current.

The induction heater 130 may further include a heating controller 140 that controls an induction heating temperature of each of the upper coil part 131 and the lower coil part 132. In the induction heater 130, the heating control unit 140 may control the heating temperature of each of the upper coil part 131 and the lower coil part 132 according to the moving speed of the cell stack 20. Here, the induction heater 130 may control the heating temperature by adjusting output, frequency, voltage, and current amount according to the moving speed of the cell stack 20.

Referring to FIGS. 2 to 5, in the induction heater 130, an induction coil 131a of each of the upper coil part 131 and the lower coil part 132 is wound in a horizontal direction and disposed in plurality in the horizontal direction to form a pattern. Here, the induction coils 131a of each of the upper coil part 131 and the lower coil part 132 may form a pattern in which the induction coils 131a are wound to have a planar cross-section having a circular shape, a rectangular shape, or an oval shape.

Specifically. referring to FIGS. 2 and 3, in the first example, the induction coils 131a of the induction heater 130, which are provided in each of the upper coil part 131 and the lower coil part 132, may form a pattern in which the induction coils 131a are wound to have a planar cross-section having a circular shape. Here, a case 131b in which the induction coils 131a wound in the form of the pattern are accommodated may be provided.

Referring to FIGS. 2 and 4, in the second example, induction coils 131a' of an induction heater 130', which are provided in each of an upper coil part 131' and a lower coil part, may form a pattern in which the induction coils 131a' are wound to have a planar cross-section having a rectangular shape.

Referring to FIGS. 2 and 5, in the third example, induction coils 131a" of an induction heater 130", which are provided in each of an upper coil part 131" and a lower coil part, may form a pattern in which the induction coils 131a" are wound to have a planar cross-section having an oval shape.

The pressing part 150 presses the induction-heated cell stack 20 to bond the plurality of unit cells 10 to each other so as to manufacture the electrode assembly.

The pressing part 150 may press the cell stack 20, which are stacked and induction-heated, by predetermined pressure to be bonded to each other.

The pressing part 150 may include an upper pressing part 151 and a lower pressing part 152. In the unit cell bonding process, the upper pressing part 151 and the lower pressing part 152 may press the cell stack 20 in the upward-downward direction to bond the unit cells 10 in the cell stack 20 to each other, while passing the cell stack 20 between the upper pressing part 151 and the lower pressing part 152.

### [Description of the Symbols]

1: Secondary battery
11: Positive electrode
12: Negative electrode
13: Electrode
14, 15: Separator
10: Unit cell
20: Cell stack
31: Positive electrode tab
32: Negative electrode tab
30: Electrode tab
40: Electrode lead
41: Positive electrode lead
42: Negative electrode lead
50: Electrode assembly
60: Pouch
61: Accommodation part
110: Lamination part
111: Upper lamination part
112: Lower lamination part
120: Stack guide part
130, 130', 130": Induction heater
131, 131', 131": Upper coil part
131a, 131a', 131a": Induction coil
131b: Case
132: Lower coil part
140: Heating controller
150: Pressing part
151: Upper pressing part
152: Lower pressing part

## Claims

1. A method for manufacturing an electrode assembly, the method comprising:
a lamination process of alternately stacking an electrode (13) and a separator (14, 15) to bond the stacked electrode (13) and separator (14, 15) to each other;
a cutting process of cutting the electrode (13) and the separator (14, 15), which are bonded to each other, to a predetermined size to form a plurality of unit cells (10);
a stacking process of sequentially stacking the plurality of cut unit cells (10) to form a cell stack (20);
an induction heating process of induction-heating the cell stack (20) by an induction heater (130); and
a unit cell bonding process of pressing the induction-heated cell stack (20) to bond the plurality of unit cells (10) to each other,
**characterized in that**
the induction heater (130) comprises an upper coil part (131) disposed above the cell stack (20), and a lower coil part (132) disposed below the cell stack (20), and
wherein, in the induction heating process, the cell stack (20) is induction-heated while passing between the upper coil part (131) and the lower coil part (132), and
wherein an induction coil (131a) of each of the upper coil part (131) and the lower coil part (132) is wound in a horizontal direction and disposed in plurality in the horizontal direction to form a pattern.

2. The method of claim 1, wherein the cell stack (20) is heated to a temperature of 50°C to 150°C in the induction heating process.

3. The method of claim 1, wherein the electrode (13) comprises a metal material,
wherein, in the induction heating process, a current passes through the upper coil part (131) and the lower coil part (132) to generate an eddy current so as to heat the cell stack (20) by resistance heat of the electrode (13), which is generated by the eddy current.

4. The method of claim 1, wherein the induction heater (130) further comprises a heating controller (140) configured to control an induction heating temperature of each of the upper coil part (131) and the lower coil part (132),
wherein, in the induction heating process, the heating controller (140) controls the heating temperature of each of the upper coil part (131) and the lower coil part (132) according to a moving speed of the cell stack (20).

5. The method of claim 1, wherein the induction coils (131a) of each of the upper coil part (131) and the lower coil part (132) form a pattern in which the induction coils (131a) are wound to have a planar cross-section having a circular shape, a rectangular shape, or an oval shape.

6. A method for manufacturing a secondary battery, the method comprising an accommodation process of accommodating, in a pouch (60), an electrode assembly manufactured by the method for manufacturing an electrode assembly of any one of claims 1 to 5.

7. A device for manufacturing an electrode assembly, the device comprising:
a lamination part (110) configured to alternately stack an electrode (13) and a separator (14, 15) and bond the stacked electrode (13) and separator (14, 15) to each other;
a cutting part (C3) configured to cut the electrode (13) and the separator (14, 15), which are bonded to each other, to a predetermined size to form a plurality of unit cells (10);
a stacking part configured to sequentially stack the plurality of cut unit cells (10) to form a cell stack (20);
an induction heater (130) configured to induction-heat the cell stack (20); and
a pressing part (150) configured to press the induction-heated cell stack (20) to bond the plurality of unit cells (10) to each other,
**characterized in that**
the induction heater (130) comprises an upper coil part (131) disposed above the cell stack (20), and a lower coil part (132) disposed below the cell stack (20),
wherein the induction heater (130) induction-heats the cell stack (20) disposed between the upper coil part (131) and the lower coil part (132), and
wherein an induction coil (131a) of each of the upper coil part (131) and the lower coil part (132) is wound in a horizontal direction and disposed in plurality in the horizontal direction to form a pattern.

8. The device of claim 7, wherein the induction heater (130) further comprises a heating controller (140) configured to control an induction heating temperature of each of the upper coil part (131) and the lower coil part (132),
wherein the heating controller (140) controls the heating temperature of each of the upper coil part (131) and the lower coil part (132) according to a moving speed of the cell stack (20).

9. The device of claim 8, wherein the induction coils (131a) of each of the upper coil part (131) and the lower coil part (132) form a pattern in which the induction coils (131a) are wound to have a planar cross-section having a circular shape, a rectangular shape, or an oval shape.

## Patentansprüche

1. Verfahren zum Herstellen einer Elektrodenanordnung, wobei das Verfahren umfasst:
einen Laminierungsprozess des abwechselnden Stapelns einer Elektrode (13) und eines Separators (14, 15), um die gestapelte Elektrode (13) und den gestapelten Separator (14, 15) miteinander zu verbinden;
einen Schneideprozess des Schneidens der Elektrode (13) und des Separators (14, 15), die miteinander verbunden sind, auf eine vorbestimmte Größe, um eine Vielzahl von Einheitszellen (10) zu bilden;
einen Stapelprozess des sequentiellen Stapelns der Vielzahl von geschnittenen Einheitszellen (10), um einen Zellenstapel (20) zu bilden;
einen Induktionserwärmungsprozess des Induktionserwärmens des Zellenstapels (20) durch eine Induktionsheizung (130); und
einen Einheitszellenverbindungsprozess des Pressens des induktionserwärmten Zellenstapels (20), um die Vielzahl von Einheitszellen (10) miteinander zu verbinden,
**dadurch gekennzeichnet, dass**
die Induktionsheizung (130) einen oberen Spulenteil (131), der über dem Zellenstapel (20) angeordnet ist, und einen unteren Spulenteil (132), der unter dem Zellenstapel (20) angeordnet ist, umfasst, und
wobei in dem Induktionserwärmungsprozess der Zellenstapel (20) induktionserwärmt wird, während er zwischen dem oberen Spulenteil (131) und dem unteren Spulenteil (132) hindurchgeht, und
wobei eine Induktionsspule (131a) von jedem von dem oberen Spulenteil (131) und dem unteren Spulenteil (132) in einer horizontalen Richtung gewickelt ist und in einer Vielzahl in der horizontalen Richtung angeordnet ist, um ein Muster zu bilden.

2. Verfahren nach Anspruch 1, bei dem der Zellenstapel (20) in dem Induktionserwärmungsprozess auf eine Temperatur von 50 °C bis 150 °C erwärmt wird.

3. Verfahren nach Anspruch 1, bei dem die Elektrode (13) ein Metallmaterial umfasst, wobei in dem Induktionserwärmungsprozess ein Strom durch den oberen Spulenteil (131) und den unteren Spulenteil (132) hindurchgeht, um einen Wirbelstrom zu erzeugen, um den Zellenstapel (20) durch Widerstandswärme der Elektrode (13), die durch den Wirbelstrom erzeugt wird, zu erwärmen.

4. Verfahren nach Anspruch 1, bei dem die Induktionsheizung (130) ferner eine Erwärmungssteuerung (140) umfasst, die konfiguriert ist, um eine Induktionserwärmungstemperatur sowohl des oberen Spulenteils (131) als auch des unteren Spulenteils (132) zu steuern,
wobei in dem Induktionserwärmungsprozess die Erwärmungssteuerung (140) die Erwärmungstemperatur sowohl des oberen Spulenteils (131) als auch des unteren Spulenteils (132) gemäß einer Bewegungsgeschwindigkeit des Zellenstapels (20) steuert.

5. Verfahren nach Anspruch 1, bei dem die Induktionsspulen (131a) von jedem von dem oberen Spulenteil (131) und dem unteren Spulenteil (132) ein Muster bilden, in dem die Induktionsspulen (131a) gewickelt sind, um einen ebenen Querschnitt mit einer kreisförmigen Form, einer rechteckigen Form oder einer ovalen Form zu haben.

6. Verfahren zum Herstellen einer Sekundärbatterie, wobei das Verfahren einen Aufnahmeprozess zum Aufnehmen einer Elektrodenanordnung, die durch das Verfahren zum Herstellen einer Elektrodenanordnung nach einem der Ansprüche 1 bis 5 hergestellt wurde, in einem Beutel (60) umfasst.

7. Vorrichtung zum Herstellen einer Elektrodenanordnung, wobei die Vorrichtung umfasst:
einen Laminierungsteil (110), der konfiguriert ist, um abwechselnd eine Elektrode (13) und einen Separator (14, 15) zu stapeln und die gestapelte Elektrode (13) und den gestapelten Separator (14, 15) miteinander zu verbinden;
einen Schneideteil (C3), der konfiguriert ist, um die Elektrode (13) und den Separator (14, 15), die miteinander verbunden sind, auf eine vorbestimmte Größe zu schneiden, um eine Vielzahl von Einheitszellen (10) zu bilden;
einen Stapelteil, der konfiguriert ist, um die Vielzahl von geschnittenen Einheitszellen (10) sequentiell zu stapeln, um einen Zellenstapel (20) zu bilden;
eine Induktionsheizung (130), die konfiguriert ist, um den Zellenstapel (20) per Induktion zu erwärmen; und
einen Pressteil (150), der konfiguriert ist, um den induktionserwärmten Zellenstapel (20) zu pressen, um die Vielzahl von Einheitszellen (10) miteinander zu verbinden,
**dadurch gekennzeichnet, dass**
die Induktionsheizung (130) einen oberen Spulenteil (131), der über dem Zellenstapel (20) angeordnet ist, und einen unteren Spulenteil (132), der unter dem Zellenstapel (20) angeordnet ist, umfasst,
wobei die Induktionsheizung (130) den Zellenstapel (20), der zwischen dem oberen Spulenteil (131) und dem unteren Spulenteil (132) angeordnet ist, per Induktion erwärmt, und
wobei eine Induktionsspule (131a) von jedem von dem oberen Spulenteil (131) und dem unteren Spulenteil (132) in einer horizontalen Richtung gewickelt ist und in einer Vielzahl in der horizontalen Richtung angeordnet ist, um ein Muster zu bilden.

8. Vorrichtung nach Anspruch 7, bei der die Induktionsheizung (130) ferner eine Erwärmungssteuerung (140) umfasst, die konfiguriert ist, um eine Induktionserwärmungstemperatur sowohl des oberen Spulenteils (131) als auch des unteren Spulenteils (132) zu steuern,
wobei die Erwärmungssteuerung (140) die Erwärmungstemperatur sowohl des oberen Spulenteils (131) als auch des unteren Spulenteils (132) gemäß einer Bewegungsgeschwindigkeit des Zellenstapels (20) steuert.

9. Vorrichtung nach Anspruch 8, bei der die Induktionsspulen (131a) von jedem von dem oberen Spulenteil (131) und dem unteren Spulenteil (132) ein Muster bilden, in dem die Induktionsspulen (131a) gewickelt sind, um einen ebenen Querschnitt mit einer kreisförmigen Form, einer rechteckigen Form oder einer ovalen Form aufzuweisen.

## Revendications

1. Procédé de fabrication d'un ensemble d'électrode, le procédé comprenant :
un processus de stratification comportant l'empilement alterné d'une électrode (13) et d'un séparateur (14, 15) pour la liaison l'un à l'autre de l'électrode (13) et du séparateur (14, 15) empilés ;
un processus de coupe comportant la coupe de l'électrode (13) et du séparateur (14, 15), liés l'un à l'autre, à une taille prédéterminée afin de constituer une pluralité de cellules unitaires (10) ;
un processus d'empilement comportant l'empilement en séquence de la pluralité de cellules unitaires coupées (10) pour former un empilement de cellules (20) ;
un processus de chauffage par induction comportant le chauffage par induction de l'empilement de cellules (20) par un four à induction (130) ; et
un processus de liaison de cellules unitaires comportant la pression de l'empilement de cellules (20) chauffé par induction pour lier l'une à l'autre la pluralité de cellules unitaires (10),
**caractérisé en ce que**
le four à induction (130) comprend une bobine supérieure (131) disposée au-dessus de l'empilement de cellules (20), et une bobine inférieure (132) disposée au-dessous de l'empilement de cellules (20), et
au cours du processus de chauffage par induction, l'empilement de cellules (20) est chauffé par induction en passant entre la bobine supérieure (131) et la bobine inférieure (132), et
une bobine d'induction (131a) de chacune de la bobine supérieure (131) et la bobine inférieure (132) étant enroulée dans une direction horizontale et disposée en pluralité dans la direction horizontale pour former une configuration.

2. Procédé selon la revendication 1, l'empilement de cellules (20) étant chauffé à une température comprise entre 50°C et 150°C au cours du processus de chauffage par induction.

3. Procédé selon la revendication 1, l'électrode (13) comprenant un matériau métallique, et
un courant traversant la bobine supérieure (131) et la bobine inférieure (132) au cours du processus de chauffage par induction, en générant un courant de Foucault de façon à chauffer l'empilement de cellules (20) par la chaleur de résistance de l'électrode (13) générée par le courant de Foucault.

4. Procédé selon la revendication 1, le four à induction (130) comprenant en outre un régulateur de chauffage (140) configuré pour réguler une température de chauffage par induction de chacune de la bobine supérieure (131) et de la bobine inférieure (132), et
le régulateur de chauffage (140) effectuant, au cours du processus de chauffage par induction, la régulation de la température de chauffage de chacune de la bobine supérieure (131) et la bobine inférieure (132) en fonction de la vitesse de déplacement de l'empilement de cellules (20).

5. Procédé selon la revendication 1, les bobines d'induction (131a) de chacune de la bobine supérieure (131) et de la bobine inférieure (132) formant une configuration dans laquelle les bobines d'induction (131a) sont enroulées de façon à présenter une section transversale plane de forme circulaire, de forme rectangulaire, ou de forme ovale.

6. Procédé de fabrication d'une batterie secondaire, le procédé comprenant un processus d'intégration, comportant l'intégration, dans une poche (60), d'un ensemble d'électrodes fabriqué avec le procédé de fabrication d'un ensemble d'électrodes selon une quelconque des revendications 1 à 5.

7. Dispositif de fabrication d'un ensemble d'électrodes, le dispositif comprenant :
un élément de stratification (110) configuré pour empiler en alternance une électrode (13) et un séparateur (14, 15), et lier l'un à l'autre l'électrode (13) et le séparateur (14, 15) empilés ;
un élément de coupe (C3) configuré pour couper l'électrode (13) et le séparateur (14, 15), qui sont liés l'un à l'autre, à une taille prédéterminée de façon à former une pluralité de cellules unitaires (10) ;
un élément d'empilement configuré pour empiler en séquence la pluralité de cellules unitaires (10) de façon à former un empilement de cellules (20) ;
un four à induction (130) configuré pour chauffer par induction l'empilement de cellules (20) ; et
une partie de pression (150) configurée pour presser l'empilement de cellules chauffé par induction (20) de façon à lier l'une à l'autre la pluralité de cellules unitaires (10) ;
**caractérisé en ce que**
le four à induction (130) comprend une bobine supérieure (131) disposée au-dessus de l'empilement de cellules (20), et une bobine inférieure (132) disposée au-dessous de l'empilement de cellules (20),
le four à induction (130) chauffe par induction l'empilement de cellules (20) disposé entre la bobine supérieure (131) et la bobine inférieure (132), et
une bobine d'induction (131a) de chacune de la bobine supérieure (131) et la bobine inférieure (132) est enroulée dans une direction horizontale et disposée en pluralité dans la direction horizontale pour former une configuration.

8. Dispositif selon la revendication 7, le four à induction (130) comprenant en outre un régulateur de chauffage (140) configuré pour réguler une température de chauffage par induction de chacune de la bobine supérieure (131) et la bobine inférieure (132), et
le régulateur de chauffage (140) effectuant la régulation de la température de chauffage de chacune de la bobine supérieure (131) et la bobine inférieure (132) en fonction de la vitesse de déplacement de l'empilement de cellules (20).

9. Dispositif selon la revendication 8, les bobines d'induction (131a) de chacune de la bobine supérieure (131) et de la bobine inférieure (132) formant une configuration dans laquelle les bobines d'induction (131a) sont enroulées de façon à présenter une section transversale plane de forme circulaire, de forme rectangulaire, ou de forme ovale.
